(19) Europäisches Patentamt
European Patent Office
Office européen des brevets

(11) Veröffentlichungsnummer : **0 370 349 B1**

# (12) EUROPÄISCHE PATENTSCHRIFT

(45) Veröffentlichungstag der Patentschrift : **04.12.91 Patentblatt 91/49**

(51) Int. Cl.$^5$ : **C02F 1/28,** C09K 3/32

(21) Anmeldenummer : **89120979.3**

(22) Anmeldetag : **11.11.89**

## (54) Verfahren zur Entfernung von flächig verteilten Kohlenwasserstoffen, insbesondere Ölrückständen.

(30) Priorität : **24.11.88 DE 3839570**

(43) Veröffentlichungstag der Anmeldung : **30.05.90 Patentblatt 90/22**

(45) Bekanntmachung des Hinweises auf die Patenterteilung : **04.12.91 Patentblatt 91/49**

(84) Benannte Vertragsstaaten : **DE FR GB IT NL**

(56) Entgegenhaltungen :
**AU-A- 471 971**
**FR-A- 2 103 217**

(56) Entgegenhaltungen :
**US-A- 3 977 969**
**PATENT ABSTRACTS OF JAPAN, Teil 13, Nr. 3 (C-557), 3. März 1987; & JP-A-63 215 789 (NEW JAPAN CHEM. CO.)**

(73) Patentinhaber : **BAYER AG**
**W-5090 Leverkusen 1 Bayerwerk (DE)**

(72) Erfinder : **Augustin, Thomas, Dr.**
**Ritterstrasse 59**
**W-5000 Koeln 1 (DE)**
Erfinder : **Schäpel, Dietmar, Dr.**
**Johanniterstrasse 15**
**W-5000 Köln 80 (DE)**
Erfinder : **Nowak, Peter**
**Schubertstrasse 42**
**W-4047 Dormagen 1 (DE)**

EP 0 370 349 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Entfernung von flächig verteilten Kohlenwasserstoffen, bei dem die Kohlenwasserstoffe in ein Gel überführt werden, das anschließend mechanisch entfernt wird.

Bei der Handhabung von Kohlenwasserstoffen, z.B. bei Transport, Lagerung und Verarbeitung von Erdöl, kann es durch unsachgemäßes Vorgehen oder Unfälle dazu kommen, daß Kohlenwasserstoffe in unerwünschter Weise flächig verteilt werden, z.B. in Form eines Ölfilms auf Wasser. Für die Entfernung derartiger Kohlenwasserstoffe sind schon einige Methoden bekannt, die jedoch alle mit Nachteilen behaftet sind.

Am verbreitetsten ist die Methode flächig verteilte Kohlenwasserstoffe mit granulierten oder pulverförmigen porösen Sorptionsmitteln aufzunehmen (siehe SU-PS 922079). Als solche Sorptionsmittel werden z.B. Polyurethane, Polystyrole, Phenol-Formaldehyd-Harze, geblähter Perlit, Vermikulit, Bimsstein, Holzspäne und Sägemehl empfohlen. Nachteilig ist, daß solche Sorptionsmittel nach der Ölaufnahme kein zusammenhängendes Gebilde ergeben und deshalb die mechanische Entfernung, beispielsweise von einer Wasseroberfläche, schwierig ist.

Gemäß einer anderen Methode werden auf einer Wasseroberfläche verteilte Kohlenwasserstoffe emulgiert oder dispergiert. Durch die damit verbundene Oberflächenvergrößerung soll der biologische Abbau des Öls beschleunigt werden (siehe Institute of Petroleum, Guidelines on the Use of Oil Spill Dispersants, London, 1986). Hierbei handelt es sich um ein lange Zeit beanspruchendes Entfernungsverfahren, denn Kohlenwasserstoffe werden auch bei feiner Verteilung nur sehr langsam biologisch abgebaut und können noch lange auf die Umwelt einwirken. Außerdem können die zum Emulgieren oder Dispergieren benötigten Hilfsmittel (Tenside und Dispergiermittel) und deren Abbauprodukte unerwünschte Auswirkungen auf die Umwelt haben.

Schließlich ist es bekannt Kohlenwasserstoffe von Wasseroberflächen zu entfernen, indem man aus zwei Komponenten eine elastische Masse erzeugt, die das Öl aufnimmt, und dann leicht von der Wasseroberfläche zu entfernen ist. Gemäß der EP-OS 23084 wird die Masse aus Polybutadien- oder Polyisopren-Derivaten und einem Vernetzungsmittel erzeugt, gemäß der US-PS 3869385 aus einem Isocyanat und einem Amin. Nachteilig hierbei ist, daß immer zwei Chemikalien bereitzuhalten sind, die in einem definierten Verhältnis vermischt werden müssen.

Es wurde nun ein Verfahren zur Entfernung von flächig verteilten Kohlenwasserstoffen gefunden, das dadurch gekennzeichnet ist, daß man Wasser und einen Polyether mit Isocyanatendgruppen auf die Kohlenwasserstoffe einwirken läßt und das sich bildende, die Kohlenwasserstoffe enthaltende Gel mechanisch entfernt.

Im Rahmen der vorliegenden Erfindung sind unter dem Begriff "Kohlenwasserstoffe" insbesondere Erdöl, Erdölverarbeitungsprodukte, aliphatische und aromatische Kohlenwasserstoffe jeweils mit Siedepunkten oberhalb 30°C (bei Normaldruck) zu verstehen, sowie Mischungen, die solche Stoffe enthalten, beispielsweise in Mengen von 50 Gew.-% oder mehr.

Flächige Verteilung bedeutet, daß auf erfindungsgemäße Weise zu entfernende Kohlenwasserstoffe flächig ausgebreitet sind. Sie können sich beispielsweise auf Wasser-, Erd-, Metall-, Stein-, Beton-, Asphalt- oder sonstigen Oberflächen befinden. Vorzugsweise sind die Kohlenwasserstoffe so verteilt, daß das Verhältnis von Dicke der Schicht zu Durchmesser der Schicht höchstens 0,1 : 1, vorzugsweise weniger als 0,05 : 1 beträgt.

Das erfindungsgemäße Verfahren kann insbesondere zur Entfernung von Erdöl und Erdölverarbeitungsprodukten von Wasseroberflächen angewendet werden, wobei es sich bei dem Wasser z.B. um fließende oder stehende, natürliche oder künstlich angelegte, Binnen- oder Meeresgewässer handeln kann.

Es ist ein wesentliches Merkmal des erfindungsgemäßen Verfahrens, daß man darin einen Polyether mit Isocyanatendgruppen einsetzt. Beispielsweise kommen dafür Polyalkylenoxide mit Isocyanatendgruppen in Frage, die der Formel (I) entsprechen

$$R^1\left[-(OCHR^2\text{-}OCHR^3)_x\text{-}(OCHR^4\text{-}OCHR^5)_y\text{-}OCONH\text{-}R^6\text{-}NCO\right]_n \quad (I),$$

in der

$R^1$ für einen Alkylrest mit 3 bis 18 C-Atomen,

$R^2$, $R^3$, $R^4$ und $R^5$ gleich oder verschieden sind und jeweils für Wasserstoff oder einen Alkylrest mit 1 bis 20 C-Atomen,

$R^6$ für gegebenenfalls substituiertes Alkylen mit 4 bis 30 C-Atomen, Cycloalkylen mit 5 bis 30 C-Atomen oder Arylen mit 6 bis 30 C-Atomen,

x und y gleich oder verschieden sind und jeweils für eine ganze Zahl von 5 bis 200 und
n für eine der Zahlen 3, 4, 5 oder 6, stehen.
Vorzugsweise steht in Formel (I)
$R^1$ für einen Alkylrest mit 3 bis 10 C-Atomen,
$R^2$, $R^3$, $R^4$ und $R^5$ sind gleich oder verschieden und stehen jeweils vorzugsweise für Wasserstoff oder einen Alkylrest mit 1 bis 12 C-Atomen,
$R^6$ steht vorzugsweise für gegebenenfalls mit $C_1$-$C_4$-Alkyl, Isocyanat- und/oder Chlor-Gruppen substituiertes Alkylen mit 4 bis 20 C-Atomen, Cycloalkylen mit 5 bis 20 C-Atomen oder Arylen mit 6 bis 20 C-Atomen oder für bi- oder tricyclisches Cycloalkylen oder Arylen, bei denen die einzelnen Cyclen unabhängig voneinander für jeweils einen derartigen Cycloalkylen- oder Arylenrest stehen und die einzelnen Cyclen direkt und/oder über Sauerstoff-, CH—, $CH_2$—, $C(CH_3)_2$— und/oder $C(CH_3)$-Brücken verknüpft sind,
x und y sind gleich oder verschieden und stehen jeweils vorzugsweise für eine ganze Zahl von 8 bis 50 und
n steht vorzugsweise für eine der Zahlen 3, 4 oder 5.

Besonders bevorzugt stehen in Formel (I) $R^2$ und $R^4$ für Wasserstoff und $R^3$ und $R^5$ für Wasserstoff oder Methyl.

Wenn $R^2$, $R^3$, $R^4$ und $R^5$ nicht alle gleich sind, so ist es z.B. möglich, daß $R^2$ und $R^3$ gleich und $R^4$ und $R^5$ untereinander gleich, aber von $R^2$ und $R^3$ verschieden sind.

Es ist z.B. auch möglich, daß $R^2$ und $R^4$ gleich und $R^3$ und $R^5$ untereinander gleich aber von $R^2$ und $R^4$ verschieden sind. In einem $(OCHR^2\text{-}CHR^3)_x$—, $(OCHR^4\text{-}CHR^5)_y$— oder $(OCHR^2\text{-}CHR^3)_x\text{-}(OCHR^4\text{-}CHR^5)_y$-Teil der Formel (I) können unterschiedliche Reste $R^2$ bis $R^5$ statistisch oder regelmäßig verteilt sein.

Als Polyalkylenoxide mit Isocyanatendgruppen kommen erfindungsgemäß auch Mischungen verschiedener Einzelverbindungen der Formel (I) in Frage. Ebenso können in einem Molekül der Formel (I) die einzelnen an $R^1$ gebundenen Polyalkylenoxidketten mit Isocyanatendgruppen unterschiedlich aufgebaut sein, z.B. hinsichtlich der Werte von x und/oder y und/oder der Bedeutung von $R^2$ bis $R^5$.

Verbindungen der Formel (I) kann man beispielsweise herstellen, indem man ein Isocyanat der Formel (II)

$$OCN\text{-}R^6\text{-}NCO \quad (II),$$

in der
$R^6$ die bei Formel (I) angegebene Bedeutung hat, mit einem Polyether der Formel (III) umsetzt

$$R^1\left[(OCHR^2\text{-}CHR^3)_x\text{-}(OCHR^4\text{-}CHR^5)_y\text{-}OH\right]_n \quad (III),$$

in der
$R^1$ bis $R^5$, x, y und n die bei Formel (I) angegebene Bedeutung haben.

Als Isocyanate der Formel (II) sind beispielsweise geeignet : Hexamethylendiisocyanat, Cyclohexan-1,4-diisocyanat, 2,4- und 2,6- Toluylendiisocyanat und deren Gemische, 1-Isocyanatomethyl-5-isocyanato-1,3,3-trimethylcyclohexan, 2,2,4- und 2,4,4-Trimethylhexamethylen-diisocyanat-1,6, 1,5-Naphthalindiisocyanat, 1,3-Cyclopentylendiisocyanat, m- und p-Phenylen-diisocyanat, 2,4,6-Toluylentriisocyanat, 4,4′,4″-Triphenylmethantriisocyanat, 1,3- und 1,4-Xylylendiisocyanat, 3,3-Dimethyl-4,4′-diphenylmethandiisocyanat, 4,4′-Diphenylmethandiisocyanat, 3,3′-Dimethylbiphenylendiisocyanat, 4,4′-Biphenylendiisocyanat, Durendiisocyanat, 1-Phenoxy-2,4′-phenylendiisocyanat, 1-tert.-Butyl-2,4-phenylendiisocyanat, Methylen-bis-4,4′-cyclohexyldiisocyanat, 1-Chlor-2,4-phenylendiisocyanat und 4,4′-Diphenyletherdiisocyanat.

Weiterhin ist es möglich, höhermolekulare und auch höherfunktionelle Polyisocyanate einzusetzen, die aus niedermolekularen Grundkörpern durch Polymerisationsreaktion zu Uretdionen oder Isocyanuratderivaten hergestellt werden können, beispielsweise das Uretdion aus 2 Mol 2,4-Toluylendiisocyanat, die isocyanuratringhaltigen Polymerisationsprodukte aus 2,4- und 2,6-Toluylendiisocyanat und Hexamethylendiisocyanat, ein durchschnittlich zwei Isocyanuratringe im Molekül enthaltendes und 5 Mol Toluylendiisocyanat gebildetes System oder ein entsprechendes Derivat aus durchschnittlich 2 Mol Toluylendiisocyanat und 3 Mol Hexamethylendiisocyanat.

Es ist auch möglich aus Di- oder Polyisocyanaten durch partielle Hydrolyse über die Stufe der Carbamidsäure und des Amins höhere, biuretverknüpfte Systeme herzustellen, z.B. eine biuretverknüpfte Verbindung, die formal aus 3 Mol Hexamethylendiisocyanat unter Zusatz von 1 Mol Wasser und Abspaltung von 1 Mol Kohlendioxid entstanden ist, und diese als Isocyanate der Formel (II) einzusetzen. Geeignete Produkte erhält man insbesondere dann, wenn das Molverhältnis von Hydroxyverbindungen zum Isocyanat so gewählt wird, daß bei den statistisch gebildeten Reaktionsprodukten stets freie NCO-Gruppen vorhanden bleiben und ein Molgewicht von 2000 bis 10 000 eingehalten wird.

Bevorzugt werden als Isocyanate der Formel (II) Diisocyanate, insbesondere Hexamethylendiisocyanat, Isophorondiisocyanat, Toluylendiisocyanat und Diphenylmethandiisocyanat eingesetzt.

Polyether der Formel (III) kann man beispielsweise erhalten, indem man einen mehrwertigen Alkohol der Formel (IV)

$$R^2\text{-}(OH)_n \quad (IV),$$

in der

$R^1$ und n die bei Formel (I) angegebene Bedeutung haben,

mit Alkylenoxiden der Formeln (V) und (VI) umsetzt,

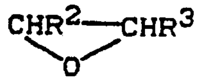 (V) 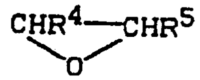 (VI),

in denen

$R^2$, $R^3$, $R^4$ und $R^5$ die bei Formel (I) angegebene Bedeutung haben.

Als mehrwertige Alkohole der Formel (IV) sind solche auf der Basis von Propanen, Butanen, Pentanen und Hexanen bevorzugt, die mindestens 3 OH-Gruppen enthalten. Besonders bevorzugt sind Glycerin, Pentaerythrit und Trimethylolpropan.

Als Alkylenoxide der Formeln (V) und (VI) sind Ethylenoxid, Propylenoxid, 1,2- und 2,3-Epoxibutan, Dodecyloxid, Stearyloxid und beliebige Gemische davon bevorzugt. Besonders bevorzugt sind Ethylen- und Propylenoxid und Gemische von Ethylen- und Propylenoxid. Wenn mehr als ein Alkylenoxid eingesetzt wird, so kann man zwei oder mehrere Alkylenoxide gleichzeitig oder nacheinander einsetzen. Je nachdem entstehen unterschiedlich aufgebaute Polyetherketten.

Bei der Umsetzung der Alkohole der Formel (IV) mit den Alkylenoxiden der Formeln (V) und (VI) können Blockpolymere, Polymere mit statistischer Verteilung (sogenannte Mischpolymere) oder Mischformen dieser Polymerarten entstehend. Vorzugsweise setzt man die Alkohole der Formel (IV) zunächst mit Propylenoxid oder einem über 50 Gew.-% Propylenoxid enthaltenden Alkylenoxidgemisch um und anschließend mit Ethylenoxid. Dabei ist weiterhin bevorzugt in die erste Stufe ein Gemisch aus Ethylenoxid und Propylenoxid einzusetzen, das bis zu 99 Gew.-% des insgesamt einzusetzenden Ethylenoxids enthält, und das restliche Alkylenoxid in der zweiten Stufe.

Bevorzugte Polyether der Formel (III) enthalten 30 bis 80 Gew.-% $O\text{-}CH_2\text{-}CH_2$-Gruppen, besonders bevorzugt 45 bis 55 Gew.-% $O\text{-}CH_2\text{-}CH_2$— und 55 bis 45 Gew.-% $O\text{-}CH_2\text{-}CH(CH_3)$-Gruppen, wobei die Summe dieser beiden Komponenten 100 Gew.-% ergibt. Weiterhin sind Polyether der Formel (III) mit Molekulargewichten von 600 bis 10 000 bevorzugt, insbesondere solche mit Molekulargewichten von 700 bis 5000.

Bei der Umsetzung des Polyethers der Formel (III) mit dem Polyisocyanat der Formel (II) wird vorteilhafterweise das Polyisocyanat vorgelegt und der Polyether zugegeben. Zur Herstellung reproduzierbarer Produkte ist es günstig, wenn der Polyether wasserfrei eingesetzt wird. Die Reaktion kann in inerten Lösungsmitteln wie Benzol, Toluol, Xylol, Chlorbenzol, o-Dichlorbenzol, Aceton oder Essigester, aber auch ohne Lösungsmittel durchgeführt werden. Vorzugsweise wird im Temperaturbereich zwischen 0 und 140° C gearbeitet und unter Zusatz von bei der Urethanherstellung üblichen Katalysatoren (siehe z.B. Houben-Weyl, Methoden der organischen Chemie, Band 14.2, Seite 61 (1963)), d.h. z.B. Basen und tertiäre Basen wie Pyridin, Methylpyridin, N,N'-Dimethylpiperazin, N,N-Dimethylbenzylamin oder N,N'-Endoethylenpiperazin.

Bei der Formel (I) handelt es sich um eine idealisierte Struktur. Je nach der Reaktivität der Reaktionsteilnehmer der Formeln (II) und (III) kann es zur Ausbildung von Polymergemischen kommen. Werden allerdings Diisocyanate der Formel (II) mit Isocyanatgruppen unterschiedlicher Reaktivität eingesetzt, beispielsweise 2,4-Toluylendiisocyanat oder Isophorondiisocyanat, so ist es bei der Umsetzung mit den Polyethern der Formel (III) möglich, in hohen Ausbeuten zunächst nur die reaktivere Isocyanatgruppe des Moleküls umzusetzen. Die als Nebenreaktion mögliche Bildung eines Reaktionsproduktes aus 2 Mol Polyether und 1 Mol Diisocyanat neben 1 Mol freiem Diisocyanat kann durch schonende Reaktionsbedingungen weitgehend unterdrückt werden, so daß bei der Umsetzung Verbindungen der Formel (I) in guten bis sehr guten Ausbeuten erhalten werden

können.

Die erfindungsgemäße Entfernung von flächig verteilten Kohlenwasserstoffen kann vorgenommen werden, indem man die Isocyanatendgruppen aufweisenden Polyether mit Wasser mischt und auf die Kohlenwasserstoffe einwirken läßt. Das Wasser kann z.B. Salz- oder Süßwasser, Frisch- oder Brauchwasser sein. Geeignete Wassermengen sind z.B. solche von 80 bis 98 Gew.-%, bezogen auf den Isocyanatendgruppen aufweisenden Polyether. Man kann diese Vermischung z.B. so vornehmen, daß man das Isocyanatendgruppen enthaltende Polyether/Wasser-Gemisch über einen Wasserstrahl oder ein Verdüsungssystem auf zu entfernende Kohlenwasserstoffe einwirken läßt. Wenn zu entfernende Kohlenwasserstoffe auf Wasseroberflächen vorliegen, kann gegebenenfalls auf eine Vormischung von Isocyanatendgruppen enthaltendem Polyether mit Wasser verzichtet werden, dann ist es jedoch vorteilhaft, den Isocyanatendgruppen enthaltenden Polyether auf der Wasseroberfläche zu bewegen.

Die Gelbildung aus dem Isocyanatendgruppen enthaltenden Polyether mit Wasser und dem zu entfernenden Kohlenwasserstoff ist im allgemeinen nach wenigen Minuten, z.B. 2 bis 15 Minuten, so weit abgeschlossen, daß man dann das Gel zusammen mit dem darin enthaltenden Kohlenwasserstoff entfernen kann, indem man z.B. das gebildete Gel abhebt. Es kann vorteilhaft sein, während der Gelbildung für eine Durchmischung des sich bildenden Gels mit dem Kohlenwasserstoff zu sorgen.

Das erfindungsgemäße Verfahren hat eine Reihe von Vorteilen : Es entsteht ein zusammenhängendes Gel, in dem die zu entfernenden Kohlenwasserstoffe enthalten sind, das auf einfache Weise entfernt werden kann. Bei der Herstellung und der erfindungsgemäßen Anwendung der Isocyanatendgruppen enthaltenden Polyether werden keine Lösungsmittel benötigt und gelangen keine Fremdstoffe in die Umgebung. Kohlenwasserstoffe können erfindungsgemäß in kurzer Zeit entfernt werden. Da Wasser häufig ohne Probleme zugänglich ist und für das erfindungsgemäße Verfahren nicht genau dosiert zu werden braucht, ist nur die Bereithaltung einer Komponente (des Isocyanatendgruppen enthaltenden Polyethers) nötig. Eine spezielle Dosiervorrichtung muß nicht zur Verfügung stehen.

## Beispiele

Beispiel A (Herstellung eines Isocyanatendgruppen enthaltenden Polyethers)

In einem Reaktionsgefäß wurden 159 Gew.-Teile Toluylendiisocyanat (80 Gew.-% 2,4- und 20 Gew.-% 2,6-Isomeres) auf 80°C erwärmt. Hierzu wurden unter Rühren innerhalb von 3 Stunden 1200 Gew.-Teile eines Polyethers zugetropft. Dieser Polyether war erhalten worden durch Anlagerung von Ethylenoxid und Propylenoxid an Glycerin, wobei zunächst 98 Gew.-% der Alkylenoxide in Form eines Gemisches aus 60 Gew.-% Ethylenoxid und 40 Gew.-% Propylenoxid und dann 2 Gew.-% der Alkylenoxide in Form von reinem Propylenoxid angelagert wurden, wobei ein Polyether mit einer Hydroxylzahl von 28 resultierte. Die Reaktionsmischung wurde bei 80°C eine weitere Stunde gerührt. Dann wurde unter Rühren auf Raumtemperatur abgekühlt. Das erhaltene Produkt hatte einen Isocyanatgehalt von 4,2 Gew.-% und eine Viskosität von 5200 Centipoise bei 25° C.

Beispiel 1 :

3 g des Produktes aus Beispiel A wurden mit 100 g Meerwasser (3,5 Gew.-% Salzgehalt) in 25 Sekunden intensiv durchmischt. Diese Mischung wurde dann zu einer Meerwasseroberfläche, die mit 85 g eines norddeutschen Rohöls (Fläche 0,028 $m^2$) bedeckt war, zugegeben. Auf der Oberfläche wurde anschließend mittels einer Zentrifugalpumpe eine Strömung erzeugt (Strömungsgeschwindigkeit 10 m/min). Nach 10 Minuten wurde ein zusammenhängender Polymer-/Öl-Teppich durch Abheben entfernt. Dieser enthielt 99% des Rohöls.

Beispiel 2 :

3 g des Produktes aus Beispiel A wurden mit 100 g Meerwasser (3,5 Gew.-% Salzgehalt) in 25 Sekunden intensiv durchmischt. Diese Mischung wurde dann zu einer Meerwasseroberfläche zugegeben, die mit 85 g eines norddeutschen Rohöls (Fläche 0,028 $m^2$) bedeckt war. Auf der Oberfläche wurde mittels einer Zentrifugalpumpe eine leichte Strömung erzeugt (Strömungsgeschwindigkeit 1 m/min). Nach 10 Minuten wurde ein zusammenhängender Polymer-/Öl-Teppich durch Abheben entfernt. Dieser enthielt 98% des eingesetzten Rohöls.

Beispiel 3 :

3 g des Produkts aus Beispiel A wurden mit 100 g Meerwasser (3,5 Gew.-% Salzgehalt) in 25 Sekunden

intensiv vermischt. Diese Mischung wurde zu einer Meerwasseroberfläche gegeben, die mit 85 g iranischem Rohöl (Fläche 0,028 $m^2$) bedeckt war. Auf der Oberfläche wurde mittels einer Zentrifugalpumpe eine leichte Strömung erzeugt (Strömungsgeschwindigkeit 1 m/min). Nach 10 Minuten wurde ein zusammenhängender Polymer-/Öl-Teppich durch Abheben entfernt. Dieser enthielt 91% des eingesetzten Rohöls.

Beispiel 4 :

3 g des Produkts aus Beispiel A wurden mit 100 g Meerwasser (3,5 Gew.-% Salzgehalt) in 25 Sekunden intensiv durchmischt. Diese Mischung wurde dann zu einer Meerwasseroberfläche gegeben, die mit 85 g schwerem iranischem Rohöl (Fläche 0,028 $m^2$) bedeckt war. Auf der Oberfläche wurde dann mittels einer Zentrifugalpumpe eine leichte Strömung erzeugt (Strömungsgeschwindigkeit 1 m/min. Nach 10 Minuten wurde ein zusammenhängender Polymer-/Öl-Teppich durch Abheben entfernt. Dieser enthielt 98% des eingesetzten Rohöls.

Beispiel 5 :

3 g des Produktes aus Beispiel A wurden mit 100 g Meerwasser (3,5 Gew.-% Salzgehalt) in 25 Sekunden intensiv durchmischt. Diese Mischung wurde dann zu einer Meerwasseroberfläche gegeben, die mit 76 g Petroleum (Fläche 0,028 $m^2$) bedeckt war. Auf der Oberfläche wurde mittels einer Zentrifugalpumpe eine leichte Strömung erzeugt (Strömungsgeschwindigkeit 1 m/min). Nach 10 Minuten wurde ein zusammenhängender Polymer-/Petroleum-Teppich durch Abheben entfernt Dieser enthielt 89,5% des eingesetzten Petroleums.

Beispiel 6 :

3 g des Produktes aus Beispiel A wurden mit 100 g Meerwasser (3,5 Gew.-% Salzgehalt) in 25 Sekunden intensiv durchmischt. Diese Mischung wurde zu einer Meerwasseroberfläche gegeben, die mit 87 g Toluol (Fläche 0,028 $m^2$) bedeckt war. Auf der Oberfläche wurde dann mittels einer Zentrifugalpumpe eine leichte Strömung erzeugt (Strömungsgeschwindigkeit 1 m/min.). Nach 10 Minuten wurde ein zusammenhängender Polymer-/Toluol-Teppich durch Abheben entfernt. Dieser enthielt 68% des zuvor eingesetzten Toluols.

Beispiel 7 :

3 g des Produktes aus Beispiel A wurden mit 100 g Meerwasser (3,5 Gew.-% Salzgehalt) in 25 Sekunden intensiv durchmischt. Diese Mischung wurde dann zu einer Meerwasseroberfläche gegeben, die mit 92 g schwerem Heizöl Typ S (Fläche 0,028 $m^2$) bedeckt war. Auf der Oberfläche wurde dann mittels seiner Zentrifugalpumpe eine leichte Strömung erzeugt (Strömungsgeschwindigkeit 1 m/min). Nach 10 Minuten wurde ein zusammenhängender Polymer-/Öl-Teppich durch Abheben entfernt. Dieser enthielt 93% des zuvor eingesetzten Heizöls.

Beispiel 8 :

9 g des Produktes aus Beispiel A wurden mit 100 g gesättigter Calciumcarbonatlösung (0,15 g Calciumcarbonat/100 ml Wasser) in 25 Sekunden intensiv durchmischt. Auf einer Betonoberfläche wurden 100 g Heizöl Typ S (Fläche 0,028 $m^2$) auf einer Fläche von 0,03 $m^2$ ausgebreitet. Auf diese Heizöloberfläche wurde dann die vorbereitete Mischung gegeben und manuell 3 Minuten lang durchmischt. Nach einer Wartezeit von 10 Minuten wurde ein zusammenhängender Polymer-/Öl-Teppich durch Abheben entfernt. Dieser enthielt 94% des zuvor eingesetzten Heizöls.

Beispiel 9 :

9 g des Produktes aus Beispiel A wurden mit 100 g Leitungswasser in 25 Sekunden intensiv durchmischt. Auf einer Betonoberfläche wurden dann 100 g norddeutsches Rohöl auf einer Fläche von 0,03 $m^2$ ausgebreitet. Auf diese Rohöloberfläche wurde die vorbereitete Mischung gegeben und manuell 3 Minuten lang durchmischt. Nach einer Wartezeit von 10 Minuten wurde ein zusammenhängender Polymer-/Rohöl-Teppich durch Abheben entfernt Dieser enthielt 90% des eingesetzten Rohöls.

**Patentansprüche**

1. Verfahren zur Entfernung von flächig verteilten Kohlenwasserstoffen, dadurch gekennzeichnet, daß man Wasser und einen Polyether mit Isocyanatendgruppen auf die Kohlenwasserstoffe einwirken läßt und das sich bildende, die Kohlenwasserstoffe enthaltende Gel mechanisch entfernt.

2. Verfahren nach Anspruch 1, dadurch gekennzeichnet, daß man als Polyether mit Isocyanatgruppen ein Polyalkylenoxid der Formel (I) verwendet

$$R^1\!\left[(OCHR^2\text{-}OCHR^3)_x\text{-}(OCHR^4\text{-}OCHR^5)_y\text{-}OCONH\text{-}R^6\text{-}NCO\right]_n \quad (I),$$

in der

$R^1$ für einen Alkylrest mit 3 bis 18 C-Atomen,

$R^2$, $R^3$, $R^4$ und $R^5$ gleich oder verschieden sind und jeweils für Wasserstoff oder einen Alkylrest mit 1 bis 20 C-Atomen,

$R^6$ für gegebenenfalls substituiertes Alkylen mit 4 bis 30 C-Atomen, Cycloalkylen mit 5 bis 30 C-Atomen oder Arylen 6 bis 30 C-Atomen,

x und y gleich oder verschieden sind und jeweils für eine ganze Zahl von 5 bis 200 und

n für eine der Zahlen 3, 4, 5 oder 6, stehen.

3. Verfahren nach Anspruch 2, dadurch gekennzeichnet, daß in Formel (I)

$R^1$ für einen Alkylrest mit 3 bis 10 C-Atomen steht,

$R^2$, $R^3$, $R^4$ und $R^5$ gleich oder verschieden sind und jeweils für Wasserstoff oder einen Alkylrest mit 1 bis 12 C-Atomen stehen,

$R^6$ für gegebenenfalls mit $C_1$-$C_4$-Alkyl-, Isocyanat- und/oder Chlor-Gruppen substituiertes Alkylen mit 4 bis 20 C-Atomen, Cycloalkylen mit 5 bis 20 C-Atomen oder Arylen mit 6 bis 20 C-Atomen oder für bi- oder tricyclisches Cycloalkylen oder Arylen, bei denen die einzelnen Cyclen unabhängig voneinander für jeweils einen derartigen Cycloalkylen- oder Arylenrest stehen und die einzelnen Cyclen direkt und/oder über Sauerstoff-, CH—, $CH_2$—, $C(CH_3)_2$— und/oder $C(CH_3)$-Brücken verknüpft sind, stehen,

x und y gleich oder verschieden sind und jeweils für eine ganze Zahl von 8 bis 50 stehen und

n für eine der Zahlen 3, 4 oder 5 steht.

4. Verfahren nach Ansprüchen 1 bis 3, dadurch gekennzeichnet, daß man die Isocyanatendgruppen aufweisenden Polyether mit Wasser mischt und auf die Kohlenwasserstoffe einwirken läßt.

5. Verfahren nach Anspruch 4, dadurch gekennzeichnet, daß man mit 80 bis 98 Gew.-% Wasser, bezogen auf Isocyanatendgruppen aufweisende Polyether, mischt.

6. Verfahren nach Ansprüchen 1 bis 5, dadurch gekennzeichnet, daß man das sich bildende Gel nach 2 bis 15 Minuten entfernt.

**Claims**

1. Process for the removal of surface-distributed hydrocarbons, characterized in that water and a polyether containing isocyanate end groups are allowed to act on the hydrocarbons and the gel containing the hydrocarbons which is formed is removed mechanically.

2. Process according to Claim 1, characterized in that, as a polyether containing isocyanate end groups, a polyalkylene oxide of the formula (I) is used

$$R^1\!\left[(OCHR^2\text{-}OCHR^3)_x\text{-}(OCHR^4\text{-}OCHR^5)_y\text{-}OCONH\text{-}R^6\text{-}NCO\right]_n \quad (I),$$

in which

$R^1$ represents an alkyl radical having 3 to 18 C atoms,

$R^2$, $R^3$, $R^4$ and $R^5$ are identical or different and each represent hydrogen or an alkyl radical having 1 to 20 C atoms,

$R^6$ represents optionally substituted alkylene having 4 to 30 C atoms, cycloalkylene having 5 to 30 C atoms or arylene having 6 to 30 C atoms,

x and y are identical or different and each represent a whole number from 5 to 200 and n represents one of the numbers 3, 4, 5 or 6.

x and y are identical or different and each represent a whole number from 5 to 200 and n represents one of the numbers 3, 4, 5 or 6.

3. Process according to Claim 2, characterized in that in formula (I)

$R^1$ represents an alkyl radical having 3 to 10 C atoms,

$R^2$, $R^3$, $R^4$ and $R^5$ are identical or different and each represent hydrogen or an alkyl radical having 1 to 12 C atoms,

$R^6$ represents alkylene having 4 to 20 C atoms, which is optionally substituted with $C_1$-$C_4$-alkyl, isocyanate and/or chlorine groups, cycloalkylene having 5 to 20 C atoms or arylene having 6 to 20 C atoms or bi- or tricyclic cycloalkylene or arylene, in which the individual rings independently of one another each represent a cycloalkylene or arylene radical of this type and the individual rings are linked directly and/ or via oxygen, CH, $CH_2$, C $(CH_3)_2$ and/ or C $(CH_3)$ bridges,

x and y are identical or different and each represent a whole number from 8 to 50 and

n represents one of the numbers 3, 4 or 5.

4. Process according to Claims 1 to 3, characterized in that the polyether containing isocyanate end groups is mixed with water and allowed to act on the hydrocarbons.

5. Process according to Claim 4, characterized in that the mixture contains 80 to 98% by weight of water, relative to the polyether containing isocyanate end groups.

6. Process according to Claims 1 to 5, characterized in that the gel formed is removed after 2 to 15 minutes.

**Revendications**

1. Procédé pour éliminer les nappes d'hydrocarbures, caractérisé en ce que l'on fait agir sur les hydrocarbures de l'eau et un polyéther à groupes terminaux isocyanate et on élimine mécaniquement le gel qui se forme et qui contient les hydrocarbures.

2. Procédé selon la revendication 1, caractérisé en ce que l'on utilise en tant que polyéther à groupes isocyanate un oxyde de polyalkylène de formule I

$$R^1\text{-}[-(OCHR^2\text{-}OCHR^3)_x\text{-}(OCHR^4\text{-}OCHR^5)_y\text{-}OCONH\text{-}R^6\text{-}NCO]_n \quad (I),$$

dans laquelle

$R^1$ représente un groupe alkyle en $C_3$-$C_{18}$,

$R^2$, $R^3$, $R^4$ et $R^5$, ayant des significations identiques ou différentes, représentent chacun l'hydrogène ou un groupe alkyle en $C_1$-$C_{20}$,

$R^6$ représente un groupe alkylène éventuellement substitué en $C_4$-$C_{30}$, cycloalkylène en $C_5$-$C_{30}$ ou arylène en $C_6$-$C_{30}$,

x et y, identiques ou différents, représentent chacun un nombre entier de 5 à 200 et

n est égal à 3, 4, 5 ou 6.

3. Procédé selon la revendication 2, caractérisé en ce que, dans la formule I,

$R^1$ représente un groupe alkyle en $C_3$-$C_{10}$,

$R^2$, $R^3$, $R^4$ et $R^5$, ayant des significations identiques ou différentes, représentent chacun l'hydrogène ou un groupe alkyle en $C_1$-$C_{12}$,

$R^6$ représente un groupe alkylène en $C_4$-$C_{20}$ éventuellement substitué par des groupes alkyle en $C_1$-$C_4$ ou des groupes isocyanate et/ou le chlore, un groupe cycloalkylène en $C_5$-$C_{20}$ ou arylène en $C_6$-$C_{20}$ ou un groupe cycloalkylène ou arylène bi- ou tri-cyclique dans lesquels les divers cycles sont, indépendamment les uns des autres, des cycles cycloalkylène ou arylène du type en question et les cycles individuels sont reliés directement et/ou par t'intermédiaire de ponts oxygène, CH, $CH_2$, $C(CH_3)_2$ et/ou $C(CH_3)$,

x et y, ayant des significations identiques ou différentes, représentent chacun un nombre entier de 8 à 50 et

n est égal à 3, 4 ou 5.

4. Procédé selon les revendications 1 à 3, caractérisé en ce que l'on mélange les polyéthers à groupes terminaux isocyanate avec de l'eau et on fait agir sur les hydrocarbures.

5. Procédé selon la revendication 4, caractérisé en ce que l'on mélange avec 80 à 98% en poids d'eau par rapport au polyéther à groupes terminaux isocyanate.

6. Procédé selon les revendications 1 à 5, caractérisé en ce que l'on retire le gel formé au bout de 2 a 15 min.